# EUROPÄISCHE PATENTSCHRIFT

(11) **EP 1 447 321 B1**
(45) Veröffentlichungstag und Bekanntmachung des Hinweises auf die Patenterteilung: **21.12.2005**
(21) Anmeldenummer: 04002516.5
(22) Anmeldetag: 05.02.2004
(51) Int. Cl.: B63G 8/00, F16K 31/126, F17C 13/04

(54) **Unterseeboot mit einem Sicherheitsventil in einem Gasversorgungsleitung**
Submarine wit a safety valve in a gas supply line
Sous-marin avec une valve de sécurité dans une conduite de gaz

(30) Priorität: 12.02.2003 DE 10305780
(43) Veröffentlichungstag der Anmeldung: 18.08.2004
(73) Patentinhaber: Howaldtswerke-Deutsche Werft GmbH, 24143 Kiel (DE)
(72) Erfinder: Jensen, Volker, Dipl.-Ing., 23556 Lübeck (DE); Stark, Matthias, Dipl.-Ing., 24211 Preetz (DE)
(74) Vertreter: Vollmann, Heiko

(56) Entgegenhaltungen:
- FR-A- 2 603 810
- US-A- 942 112
- US-A- 3 123 094
- US-A- 3 870 436
- US-A1- 2002 124 883
- US-B1- 6 415 815
- SATTLER G: "Fuel cells going on-board" JOURNAL OF POWER SOURCES, ELSEVIER SEQUOIA S.A. LAUSANNE, CH, Bd. 86, Nr. 1-2, März 2000 (2000-03), Seiten 61-67, XP004194100 ISSN: 0378-7753

## Beschreibung

Die Erfindung betrifft ein Unterseeboot, insbesondere eine Ventilanordnung für ein solches Unterseeboot.

In Unterseebooten, insbesondere für den militärischen Einsatz werden neben Batterien als Energiespeicher zunehmend auch Brennstoffzellenanlagen eingesetzt. Solche Brennstoffzellenanlagen werden, wie bei spielsweise aus SATTLER G: ,,Fuel cells going on-board" JOURNAL OF POWER SOURCES, ELSEVIER SEQUOIA S.A. LAUSANNE, CH, Bd. 86, Nr. 1-2, März 2000 (2000-03), Seiten 61-67, XP004194100 ISSN: 0378-7753 bekannt ist, typischerweise auch mit gasförmigem Brennstoff, wie beispielsweise Wasserstoff betrieben, der unter Zuführung von Sauerstoff katalytisch unter Erzeugung von Wärme und Strom in der Brennstoffzellenanlage oxidiert wird. Der Reaktanten werden üblicherweise in flüssiger Form in Druckbehältern gelagert. Der in diesen Druckbehältern herrschende Druck ist wesentlich höher als der zum Betrieb der Brennstoffzellenanla ge zulässige Druck, weshalb es regelmäßig erforderlich ist, die flüssigen Reaktanten nicht nur in gasförmige zu überführen, sondern darüber hinaus ihren Druck abzusenken. Dies erfolgt durch eine im Stand der Technik in zahlreichen Varianten bekannte Druckreduziereinrichtung - nachfolgend kurz Druckminderer genannt-.

Um zu verhindern das im Falle eines Defektes am Druckminderer die teuere und empfindliche Brennstoffzellenanlage mit zu hohem Druck beaufschlagt wird, was zu bleibenden Schäden bis zur Zerstörung führen kann, ist es bei an Land betriebenen Brennstoffzellenanlagen bekannt, dem Druckminderer ein Sicherheitsventil oder eine Berstscheibe nachzuschalten, so dass im Falle eines Defekts am Druckminderer oder einem aus anderen Gründen bedingten Druckanstieg über den für den Betrieb der Brennstoffanlage zulässigen Druck hinaus dieser erhöhte Druck über das Sicherheitsventil bzw. die Berstscheibe ins Freie abgebaut wird.

Beim Einsatz in U-Booten ist eine solche Hinterdrucksicherung in dieser Form nicht realisierbar, da es einerseits nicht tolerierbar ist, dass auch nur eine der beiden Reaktanten unkontrolliert innerhalb des Druckkörpers des Bootes, also in das Bootsinnere austritt und andererseits ein ableiten in die Umgebungsatmosphäre zumindest dann nicht möglich ist, wenn das Boot sich in einer Tauchtiefe befindet, welche, einen Umgebungsdruck oberhalb des für den Betrieb des Brennstoffzette zulässigen Druckes hat, da dann nämlich aufgrund des Umgebungsdrucks ein Druckabbau in der gewünschten Weise nicht mehr erfolgen kann.

Vor diesem Hintergrund liegt der Erfindung die Aufgabe zugrunde, ein Unterseeboot so auszubilden, dass im Falle eines Versagens des Druckminderes zuverlässig ein Austritt des Reaktionsgases in den Druckkörper sowie auch eine Beaufschlagung der Brennstoffzellenanlage mit einem unzulässig hohen Druck verhindert wird.

Diese Aufgabe wird gemäß der Erfindung durch die in Anspruch 1 angegebenen Merkmale gelöst. Vorteilhafte Ausgestaltungen der Erfindung sind in den Unteransprüchen, der nachfolgenden Beschreibung sowie der Zeichnung angegeben. Demgemäß werden also Mittel vorgesehen, welche bei einem Druckanstieg in dem vom Druckminderer zum Verbraucher führenden Teil der Versorgungsleitung über einen vorbestimmten Wert, die Versorgungsleitung absperren.

Grundgedanke der vorliegenden Erfindung ist es, ungeachtet der Ursache der Druckerhöhung dann, wenn in der Versorgungsleitung in Strömungsrichtung gesehen hinter dem Druckminderer ein unzulässig hoher Druckanstieg erfolgt, die Versorgungsleitung abzusperren um so einen weiteren Druckanstieg zu vermeiden. Der Druck, bei dem eine Absperrung erfolgt, liegt also oberhalb des normalen Betriebsdrucks, jedoch noch unterhalb des für die Brennstoffanlage höchst zulässigen Drucks. Durch das rechtzeitige Absperren der Versorgungsleitung wird einerseits sichergestellt, dass die Brennstoffzellenanlage auch dann nicht mit einem unzulässig hohen Druck beaufschlagt wird, wenn dieser - aus welchen Gründen auch immer - innerhalb der Versorgungsleitung ansteigt. Ein Austritt in das Bootsinnere, also innerhalb des Druckkörpers wird ebenfalls sicher vermieden.

Die technische Realisierung der erfindungsgemäßen Sicherungseinrichtung in einem Unterseeboot kann auf unterschiedliche Weise erfolgen. Voraussetzung bei allen Lösungen ist ein Absperrventil an geeigneter Stelle innerhalb der Versorgungsleitung, das je nach Ausführung nicht zwingend notwendig zwischen Druckminderer und Verbraucher liegen muss sondern gegebenenfalls auch vor dem Druckminderer angeordnet sein kann. Letzteres kann insbesondere dann vorgesehen sein, wenn das Absperrventil durch eine externe Steuerung (beispielsweise eine elektronische oder auch hydraulische Steuerung angesteuert wird. Dann ist lediglich erforderlich, dass im Bereich der Versorgungsleitung in Strömungsrichtung gesehen hinter dem Druckminderer und vor dem Gasverbraucher, also vor der Brennstoffzellenanlage der Druck erfasst wird, zum Beispiel durch einen Drucksensor, dessen Signal in einer elektronischen Steuerung weiterverarbeitet wird, die dann entsprechend des ermittelten Druckwertes das Absperrventil sperrend oder freigebend ansteuert. Dabei erfolgt die Ansteuerung so, dass bei einem Druckanstieg in dem vom Druckminderer zum Verbraucher führenden Teil der Versorgungsleitung über einen vorbestimmten Wert das Absperrventil sperrend angesteuert wird und unterhalb dieses Wertes öffnend angesteuert wird. Eine solche Anordnung hat den Vorteil, dass sie räumlich weitgehend unabhängig angeordnet sein kann, das Absperrventil kann an praktisch beliebiger Stelle der Versorgungsleitung eingebaut werden, jedoch muss im Hochdruckbereich das verbleibende Gas-/Druckvolumen berücksichtigt werden. Lediglich der Sensor ist im Bereich hinter dem Druckminderer vorzusehen. Die Steuerelektronik kann ebenfalls an beliebiger Stelle im Unterseeboot angeordnet werden.

Um sicherzustellen, dass auch bei Ausfall der Elektrik die Sicherheitsfunktion gewährleistet ist, kann gemäß einer Weiterbildung der Erfindung das Absperrventil mechanisch so ausgebildet sein, dass es selbsttätig schließend ist. Das Öffnen des Ventils, das heißt, das Ansteuern kann wahlweise elektrisch, pneumatisch oder hydraulisch erfolgen, je nach verfügbarem Versorgungssystem. Es versteht sich, dass insbesondere bei hydraulischer oder pneumatischer Ansteuerung auch die Steuerung selbst hydraulisch oder pneumatisch ausgelegt werden kann, dann tritt anstelle eines elektrischen Drucksensors ein hydraulischer oder pneumatischer Druckaufnehmer, welcher mit der Steuerung leitungsverbunden ist, um auf diese Weise das Drucksignal weiterverarbeiten zu können.

Um das Absperrventil selbsttätig schließend auszubilden ist es zweckmäßig den Dichtkörper oder gegebenenfalls den Schieber, falls ein Schieberventil vorgesehen ist, mit einer Federkraft zu beaufschlagen oder entsprechend mit Druck zu beaufschlagen, zum Beispiel mit dem Druck der Versorgungsleitung vor dem Absperrventil.

Unabhängig von elektrischer, pneumatischer oder hydraulischer Versorgung arbeitet ein gemäß der Erfindung vorgesehenes mechanisches Absperrventil, das in der Versorgungsleitung zwischen Druckminderer und Verbraucher geschaltet ist und das so ausgebildet ist, dass es in Abhängigkeit des Drucks am Ventileingang selbsttätig schaltet. Dann können elektrische oder sonstige Steuergeräte vollständig entfallen. Die mechanische Ausführung hat darüber hinaus den Vorteil, dass sie auch beim Ausfall anderer Systeme stets zuverlässig arbeitet und ist insofern besonders günstig. Das System arbeitet auch bei Ausfall des elektrischen Versorgungsnetzes.

Konstruktiv einfach und zugleich zuverlässig ist eine Ausbildung, bei der das Absperrventil als Sitzventil ausgebildet ist, da dann der Schließkörper in einfacher Weise in Schließrichtung federkraftbeaufschlagt werden kann, zum Beispiel durch eine Schraubendruckfeder und keine Justierung der Endstellung erforderlich ist.

Bevorzugt ist der Dichtkörper innerhalb des Ventilgehäuses mit einem Kolben und/oder einer Membran Bewegungs- gekoppelt, wobei der Kolben bzw. die Membran auf einer Seite mit dem Ventileingang und auf der anderen Seite mit einem abgeschlossenen Raum innerhalb des Ventilgehäuses leitungsverbunden ist oder mit dieser anderen Seite den abgeschlossenen Raum mittelbar oder unmittelbar begrenzt. Der Ventileingang, der mit dem Ausgang des Druckminderes leitungsverbunden ist, weist stets den Druck hinter dem Druckminderer auf, so dass dieser Druck zweckmäßigerweise auch zum Steuern des Ventils eingesetzt wird, insbesondere wenn beim Überschreiten eines vorbestimmten Druckwertes das Ventil selbsttätig geschlossen werden soll. Dieser dann eingangsseitig erhöht anstehende Druck beaufschlagt den Kolben, der sich je nach Druckanstieg unter Komprimierung des im abgeschlossenen Raum befindlichen Gasvolumens bewegt, bis schließlich durch die Bewegungskopplung mit dem Dichtkörper der Durchlass zwischen Ventilein- und -ausgang abgesperrt wird, wenn der Dichtkörper auf den Ventilsitz gepresst wird.

Bevorzugt wird eine Kombination von Kolben und Membran eingesetzt, wobei der Kolben das die wesentliche Kraft aufnehmende Bauteil ist wo hingegen die Membran Dichtfunktion ausübt und fest und dicht innerhalb des Ventilgehäuses eingespannt ist. Dabei ist die Anordnung zweckmäßigerweise so, dass der Raum unmittelbar durch den Kolben bzw. die Membran einseitig begrenzt wird, so dass die Anordnung vergleichsweise kompakt und wenig bauaufwändig ist.

Dichtkörper und Kolben können beispielsweise durch eine innerhalb des Ventilgehäuses axial bewegliche Stange verbunden sein um auf einfache Weise die Bewegungskopplung herzustellen.

Der vorzugsweise innerhalb des Ventilgehäuses liegende abgeschlossene Raum sollte eine Anschlussöffnung aufweisen, die verschließbar ist oder mittels eines Ventils oder sonstiger Mittel abgeschlossen werden kann. Diese Anschlussöffnung kann zur Entlüftung des geschlossenen Raums sowie auch zur Druckbeaufschlagung dienen, über letzteres kann nämlich der Auslösedruck des Ventils variiert und damit eingestellt werden.

Zweckmäßigerweise weist das Ventilgehäuse einen eingangsseitigen Anschluss für die vom Druckminderer kommende Versorgungsleitung und einen ausgangsseitigen Anschluss für die zum Verbraucher führende Versorgungsleitung auf, damit es unmittelbar in die Versorgungsleitung ohne weitere Armaturen integrierbar ist.

Es versteht sich, dass sowohl die vorstehend und weiter unten anhand eines Ausführungsbeispiels noch im Einzelnen angeordnete mechanische Absperrventilanordnung als auch solche, welche eine elektrische, hydraulische oder pneumatische Steuerung vorsehen, nicht nur in Verbindung mit einem Unterseeboot eingesetzt werden könnten, sondern auch bei jeder beliebigen anderen Anwendung, bei der ein ähnliches Anforderungsprofil gegeben ist oder die vorbeschriebenen Merkmale und deren Vorteile zumindest günstig sind.

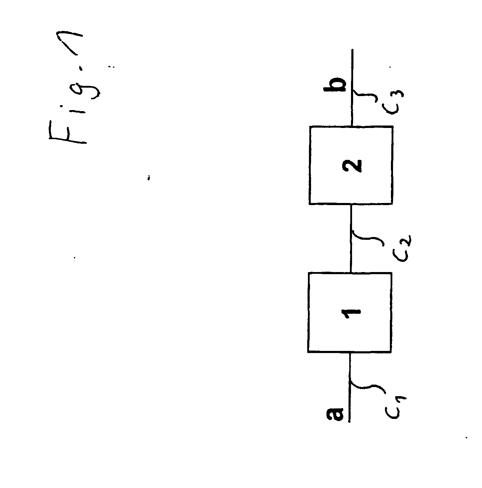

Die Erfindung ist nachfolgend anhand eines in der Figur dargestellten Ausführungsbeispiels näher erläutert. Es zeigen
- Fig. 1: den grundsätzlichen Aufbau der erfindungsgemäßen Sicherungseinrichtung in Form eines Blockschaltbildes und
- Fig. 2: in schematischer Darstellung eine Druckquelle mit Versorgungsquelle und Druckminderer sowie einem mechanisch/pneumatisch wirkenden Absperrventil im Längsschnitt.

Für den Betrieb einer Brennstoffzellenanlage wird Sauerstoff und Wasserstoff benötigt, die jeweils aus einem Druckspeicher a, einem Verbraucher b in Form der Brennstoffzellenanlage zuzuführen sind. Dies erfolgt über eine Versorgungsleitung c, welche sich in die Leitungsabschnitte c₁ vom Druckspeicher zu einer Druckreduzierungseinrichtung in Form eines Druckminderers 1, c₂ von dem Druckminderer 1 zu einer Hinterdrucksicherung 2 und c₃ von der Hinterdrucksicherung 2 zum Verbraucher b, also zur Brennstoffzellenanlage, gliedert. Die Hinterdrucksicherung 2 stellt sicher, dass dann, wenn der Druck am Ausgang des Druckminderers 1 aus welchen Gründen auch immer über einen vorbestimmten Wert ansteigt, der über dem üblichen Betriebsdruckbereich der Brennstoffzellenanlage, jedoch noch unter dem höchstzulässigen Druck liegt, mittels der Hinterdrucksicherung 2 eine Absperrung der Versorgungsleitung c erfolgt.

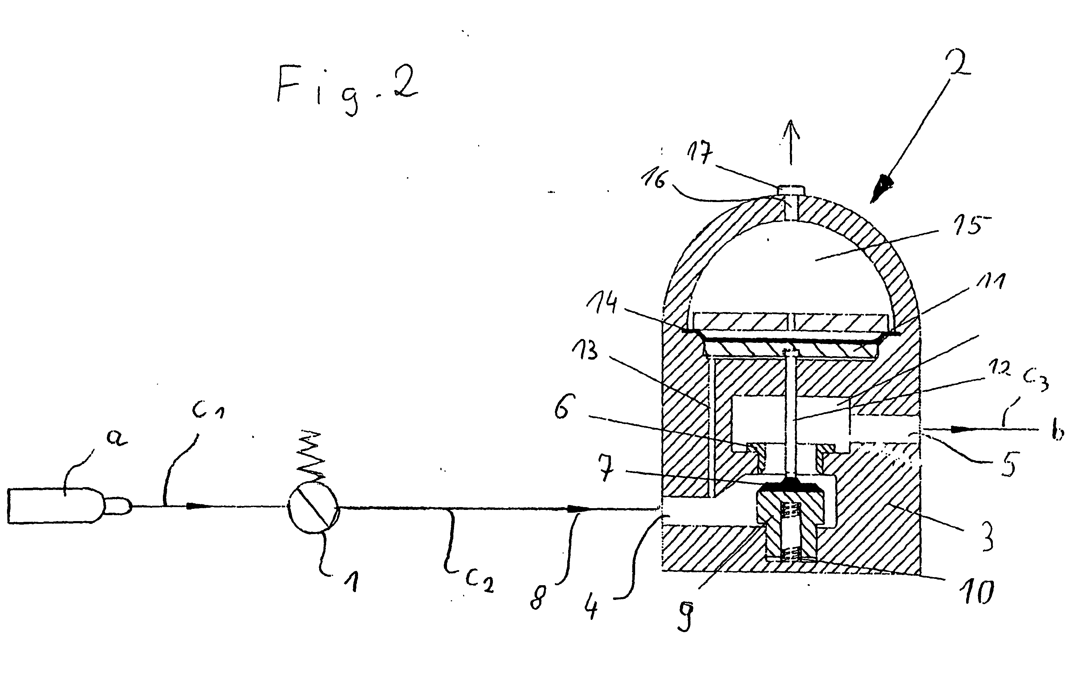

Bei der mechanisch, pneumatischen Ausführungsvariante, die nachfolgend anhand von Fig. 2 beschrieben ist, erfolgt die Absperrung der Leitung c unmittelbar innerhalb der Hinterdrucksicherung, welche als Ventilanordnung ausgebildet ist, die das Absperrventil und seine Steuerung mit umfasst. Bei den eingangs beschriebenen Varianten, die mit einem Sensor oder einem hydraulischen oder pneumatischen Druckaufnehmer in Verbindung mit einem Steuergerät und einem steuerbaren Absperrventil arbeiten, muss lediglich der Drucksensor bzw. der Druckaufnehmer im Bereich der Versorgungsleitung c₂ bis c₃ liegen, das Absperrventil kann auch im Leitungsbereich c₁ oder wahlweise c₂ oder c₃ angeordnet sein.

In Fig. 2 ist der Druckspeicher mit a gekennzeichnet, dort führt eine Versorgungsleitung c mit dem Abschnitt c₁ vom Druckspeicher a zu dem Druckminderer 1, der über den Leitungsabschnitt c₂ der Versorgungsleitung mit einer Hinterdrucksicherung 2 verbunden ist. Die Hinterdrucksicherung 2 ist dort als mechanisch pneumatische Ventilanordnung ausgebildet und weist ein Ventilgehäuse 3 auf, das einen eingangsseitigen Anschluss 4 zum Verbinden mit dem Abschnitt c₂ der Versorgungsleitung sowie einen ausgangsseitigen Anschluss 5 zum Verbinden mit dem Abschnitt c₃ der Versorgungsleitung, die zum Verbraucher b führt, aufweist. Zwischen den bei dieser Ausführung inline, jedoch höhenmäßig versetzt angeordneten Anschlüssen 4 und 5 ist das eigentliche Absperr ventil gebildet, das aus einem Ventilsitz 6 sowie einem Dichtkörper 7 in Form eines Dichtkegels aufgebaut ist. Der Ventilsitz 6 ist in eine entsprechende Bohrung innerhalb des Ventilgehäuses 3 eingegliedert, kann jedoch auch einstückig mit dem Ventilgehäuse ausgebildet sein. Die Anordnung von Dichtkörper 7 und Ventilsitz 6 ist so gewählt, dass in Strömungsrichtung 8 die Schließrichtung kraftunterstützt (siehe Fig. 2) ist.

Der Dichtkörper 7 sitzt auf einem Stufenzylinder 9, der in einer entsprechenden Bohrung am Boden des Ventilgehäuses 3 axial beweglich geführt ist. Der Stufenzylinder 9 weist von unten eine Sacklochbohrung auf, in der eine Schraubendruckfeder 10 angeordnet ist, die den Stufenzylinder 9 und somit den darauf sitzenden Dichtkörper 7 in Richtung auf den Ventilsitz 6 kraftbeaufschlagt. Das so gebildete Absperrventil ist somit selbsttätig sperrend.

Die Steuerung des Dichtkörpers 7 erfolgt fluidisch, und zwar pneumatisch mittels eines Kolbens 11 der über eine Stange 12 mechanisch mit dem Dichtkörper 7 bzw. Stufenzylinder 9 verbunden ist. Die zum Dichtkörper 7 weisende Unterseite des Kolbens 11 ist über einen Kanal 13 mit dem am Eingang 4 des Ventilgehäuses 3 anstehenden Druckes, also dem Druck in der Versorgungsleitung c₂ am Ausgang des Druckminderers 1 beaufschlagt. Die andere Seite des Kolbens 11 liegt an einer Membran 14 an, welche an ihrem Rand dicht und fest im Ventilgehäuse 3 eingespannt ist und die Wand eines geschlossenen Raumes 15 bildet, der innerhalb des Ventilgehäuses 3 vorgesehen ist. Dieser geschlossene Raum 15 bildet einen Domraum, wie er beispielsweise auch bei domdruckgesteuerten Druckminderern bekannt ist. Er weist eine Öffnung 16 auf, die mittels eines Verschlusses 17 dicht abgeschlossen ist. Diese Öffnung 16 dient zum Entlüften, insbesondere jedoch zum Druckbefüllen des Raumes 15, was typischerweise mit Stickstoff erfolgt. Über den Druck im Raum 15, der durch Befüllen fest eingestellt wird, kann der Auslösedruck 2 eingestellt werden. Der in der Zeichnung dargestellte Verschluss 17 hier stellvertretend für einen Leitungsanschluss und verdeutlicht, dass der Raum 15 geschlossen ausgebildet ist. In der Praxis wird dieser Verschluss 17 durch einen Leitungsanschluss oder durch ein unmittelbar dort eingesetztes Rückschlagventil mit Leitungsanschluss gebildet sein, über den die Befüllung und Druckeinstellung des Raumes 15 erfolgt.

Die Funktion der Hinterdrucksicherung 2 ist wie folgt: Im normalen Betrieb ist der Raum 15 mit einem vorbestimmten Druck beaufschlagt, derart, dass der Dichtkörper 7 vom Ventilsitz 6 beabstandet ist, so wie es in der Figur dargestellt ist. Dann ist das Ventil geöffnet, so dass die Anschlüsse 4 und 5 freien Durchgang haben. Es herrscht dann Kräftegleichgewicht bezüglich des durch den Druck im Raum 15 auf die Membran 14 bzw. den Kolben 11 und somit die Stange 12 und den Stufenzylinder 9 wirkende Kraft in Öffnungsrichtung und der über die Rückseite des Kolbens 11 über den Kanal 13 anstehenden Druck bzw. die sich daraus ergebende Kraft in Schließrichtung sowie die ebenfalls in diese Richtung wirkende Federkraft der Feder 10.

Im Falle eines Versagens des Druckminderers 1 steigt der Druck in dem Abschnitt c₂ der Versorgungsleitung und somit am Eingangsanschluss 4 des Ventils an. Hierdurch wird über den Kanal 13 die auf den Kolben 1 bzw. die Membran 14 wirkende Kraft vergrößert, solange, bis die durch den Innendruck im Raum 15 erzeugte Gegenkraft kleiner wird und sich der Kolben schließlich nach oben bewegt. Über die Stange 12 wird somit auch der Dichtkörper 7 nach oben und somit auf seinen Ventilsitz 6 bewegt, wodurch das Absperrventil geschlossen wird und selbst bei weiter ansteigendem Druck im Bereich des Leitungsabschnitts c2 kein weiterer Druck in dem Leitungsabschnitt c₃ und somit zum Verbraucher b gelangt.
Ein wesentlicher Vorteil dieser Anordnung ist, dass diese Steuerfunktion der Hinterdrucksicherung 2 praktisch zeitgleich mit einem Druckanstieg erfolgt, und sich im Übrigen durch die Absperrfunktion quasi selbst sichert. Die Hinterdrucksicherung 2 arbeitet zu dem stufenlos, so dass beispielsweise im Falle einer kleinen Leckage im Druckminderer 1 und dadurch bedingtem geringen Druckanstieg der Dichtkörper entsprechend dem Druckanstieg in Schließrichtung bewegt wird.

Der Vorteil dieser Anordnung ist, dass sie versorgungsunabhängig, also auch bei Ausfall elektrischer Systeme zuverlässig arbeitet, dass sie dar über hinaus dann, wenn der Druck in dem Leitungsabschnitt c₂ sich wieder auf einen zulässigen Wert absenkt, selbsttätig wieder öffnet und dass die Einrichtung selbstsichernd ist. Wenn nämlich die Membran 14 einen Defekt haben sollte oder die Dichtheit des geschlossenen Raumes 15 auf andere Weise nicht mehr sichergestellt sein sollte, baut sich der im Raum 15 vorhandene Druck ab, wodurch der Dichtkörper 7 dann federkraftbedingt auf den Ventilsitz 6 gedrückt wird und das Ventil absperrt.

### Bezugszeichenliste

- a -: Druckspeicher
- b -: Verbraucher
- c -: Versorgungsleitung
- c₁, c₂, c₃ -: Abschnitte der Versorgungsleitung c
- 1 -: Druckminderer
- 2 -: Hinterdrucksicherung
- 3 -: Ventilgehäuse
- 4 -: Eingangsanschluss
- 5 -: Ausgangsanschluss
- 6 -: Ventilsitz
- 7 -: Dichtkörper, Dichtkegel
- 8 -: Strömungsrichtung
- 9 -: Stufenzylinder mit Dichtkörper
- 10 -: Schraubendruckfeder
- 11 -: Kolben
- 12 -: Stange
- 13 -: Kanal
- 14 -: Membran
- 15 -: geschlossener Raum
- 16 -: Öffnung
- 17 -: Verschluss

## Patentansprüche

1. Unterseeboot, in dessen Druckkörper ein Gasverbraucher in Form einer Brennstoffzellenanlage (b) aus einer Druckquelle (a) über eine Versorgungsleitung (c) gespeist wird, wobei zwischen Druckquelle (a) und Gasverbraucher (b) ein Druckminderer (1) geschaltet ist, **dadurch gekennzeichnet, dass** Mittel (2) vorgesehen sind, welche bei einem Druckanstieg in dem vom Druckminderer zum Verbraucher (b) führenden Teil (c₃) der Versorgungsleitung (c) über einen vorbestimmten Wert, die Versorgungsleitung (c) absper ren.

2. Unterseeboot nach Anspruch 1, bei dem in der Versorgungsleitung (c) zwischen Druckquelle (a) und Verbraucher (b) ein Absperrventil geschaltet ist, bei dem in der Versorgungsleitung (c₂) zwischen Druckminderer (1) und Verbraucher (b) ein Drucksensor angeordnet ist, und bei dem eine Steuerung vorgesehen ist, welche in Abhängigkeit des Sensorsignals das Absperrventil ansteuert.

3. Unterseeboot nach einem der vorhergehenden Ansprüche, bei dem das Absperrventil (2) mechanisch selbsttätig schließend ausgebildet und elektrisch, pneumatisch oder hydraulisch öffnend ansteuerbar ist.

4. Unterseeboot nach einem der vorhergehenden Ansprüche, bei dem in der Versorgungsleitung zwischen Druckminderer und Verbraucher ein Absperrventil (2) geschaltet ist, welches in Abhängigkeit des Drucks am Ventileingang selbsttätig schaltet.

5. Unterseeboot nach einem der vorhergehenden Ansprüche, bei dem das Absperrventil (2) als Sitzventil (6, 7) ausgebildet ist und der Dichtkörper (7) in Schließrichtung federkraftbeaufschlagt ist.

6. Unterseeboot nach einem der vorhergehenden Ansprüche, bei dem der Dichtkörper (7) mit einem Kolben (11) und/oder einer Membran (14) bewegungsgekoppelt ist, der bzw. die auf einer Seite mit dem Ventileingang (4) und auf der anderen Seite mit einem abgeschlossenes Raum (15) leitungsverbunden sind oder mit dieser anderen Seite den abgeschlossenen Raum (15) begrenzt.

7. Unterseeboot nach einem der vorhergehenden Ansprüche, bei dem der Kolben (11) mit einer Seite eine Membran (14) beaufschlagt, die innerhalb des Ventilsgehäuses (3) eingespannt ist und den abgeschlossenen Raum (15) begrenzt.

8. Unterseeboot nach einem der vorhergehenden Ansprüche, bei dem Dichtkörper (7) und Kolben (11) durch eine innerhalb des Ventilgehäuses (3) axial bewegliche Stange (12) verbunden sind.

9. Unterseeboot nach einem der vorhergehenden Ansprüche, bei dem der abgeschlossene Raum (15) einen Anschluss (16) zum Entlüften oder zum Druckbeaufschlagen aufweist.

10. Unterseeboot nach einem der vorhergehenden Ansprüche, bei dem das Ventilgehäuse (3) einen eingangsseitigen Anschluss (4) für die vom Druckminderer (1) kommende Versorgungsleitung (c₂) und einen ausgangsseitigen Anschluss (5) für die zum Verbraucher (b) führende Versorgungsleitung (c₃) aufweist.

## Claims

1. A submarine, in whose pressure hull a gas consumer in the form of a fuel cell installation (b) is fed from a pressure source (a) via a supply conduit (c), wherein a pressure-reducer (1) is connected between the pressure source (a) and the gas consumer (b), **characterised in that** means (2) are provided which block the supply conduit (c) given an increase in pressure beyond a predefined value in the part (c₃) of the supply conduit (c), which leads from the pressure-reducer to the consumer (b).

2. A submarine according to claim 1, with which a shut-off valve is connected in the supply conduit (c) between the pressure source (a) and the consumer (b), with which a pressure sensor is arranged in the supply conduit (c₂) between the pressure-reducer (1) and the consumer (b), and with which a control is provided which activates the shut-off valve in dependence on the sensor signal.

3. A submarine according to one of the preceding claims, with which the shut-off valve (2) is designed to close mechanically in a self-acting manner, and may be activated to open in an electrical, pneumatic or hydraulic manner.

4. A submarine according to one of the preceding claims, with which in the supply conduit between the pressure-reducer and the consumer there is arranged a shut-off valve (2) which switches in a self-acting manner in dependence on the pressure at the valve inlet.

5. A submarine according to one of the preceding claims, with which the shut-off valve (2) is designed as a seat valve (6, 7) and the sealing body (7) is impinged with spring force in the closure direction.

6. A submarine according to one of the preceding claims, with which the sealing body (7) is coupled in movement to a piston (11) and/or to a membrane (14), said piston or membrane being connected in a conducting manner on one side to the valve inlet (4) and on the other side to a closed-off space (15), or with this other side delimits the closed-off space (15).

7. A submarine according to one of the preceding claims, with which the piston (11) with one side impinges a membrane (14) retained within the valve housing (3) and delimiting the closed-off space (15).

8. A submarine according to one of the preceding claims, with which the sealing body (7) and piston (11) are connected by a rod (12) which is axially movable within the valve housing (3).

9. A submarine according to one of the preceding claims, with which the closed space (15) comprises a connection (16) for bleeding or for pressure impingement.

10. A submarine according to one of the preceding claims, with which the valve housing (3) comprises a connection (4) on the inlet side for the supply conduit (c₂) coming from the pressure-reducer (1), and a connection (5) on the outlet side for the supply conduit (c₃) leading to the consumer (b).

## Revendications

1. Sous-marin dans la coque épaisse duquel un ensemble consommateur de gaz sous forme d'une installation de piles à combustible (b) est, à partir d'une source de pression (a), alimenté par l'intermédiaire d'un conduit de distribution (c), un manodétendeur (1) étant monté entre la source de pression (a) et l'ensemble consommateur de gaz (b), **caractérisé en ce qu'**il est prévu des moyens (2) qui, dans le cas d'une augmentation de pression au-dessus d'une valeur prédéterminée dans la partie (c₃), menant du manodétendeur à l'ensemble consommateur (b), du conduit de distribution (c), obture le conduit de distribution (c).

2. Sous-marin selon la revendication 1, dans lequel une vanne d'arrêt est montée dans le conduit de distribution (c) entre la source de pression (a) et l'ensemble consommateur (b), dans lequel un capteur de pression est disposé dans le conduit de distribution (c₂) entre le manodétendeur (1) et l'ensemble consommateur (b), et dans lequel il est prévu une commande qui excite la vanne d'arrêt en fonction du signal du capteur.

3. Sous-marin selon l'une des revendications précédentes, dans lequel la vanne d'arrêt (2) est conçue de façon à se fermer automatiquement par voie mécanique et peut être excitée par voie électrique, pneumatique ou hydraulique, de façon à s'ouvrir.

4. Sous-marin selon l'une des revendications précédentes, dans lequel, dans le conduit de distribution entre le manodétendeur et l'ensemble consommateur, est montée une vanne d'arrêt (2), qui commute automatiquement en fonction de la pression à l'entrée de la vanne.

5. Sous-marin selon l'une des revendications précédentes, dans lequel la vanne d'arrêt (2) est réalisée sous forme d'une vanne à siège (6, 7) et l'obturateur (7) est sollicité dans le sens de la fermeture par la force d'un ressort.

6. Sous-marin selon l'une des revendications précédentes, dans lequel l'obturateur (7) est accouplé, en vue de son déplacement, à un piston (11) et/ou une membrane (14), qui sur une face sont en liaison par conduit avec l'entrée (4) de la vanne et sur l'autre face avec un espace clos (15) ou délimite avec cette autre face l'espace clos (15).

7. Sous-marin selon l'une des revendications précédentes, dans lequel le piston (11) sollicite, avec une face, une membrane (14) qui est tendue à l'intérieur du corps (3) de la vanne et délimite l'espace clos (15).

8. Sous-marin selon l'une des revendications précédentes, dans lequel l'obturateur (7) et le piston (11) sont reliés par une tige (12) mobile axialement à l'intérieur du corps (3) de la vanne.

9. Sous-marin selon l'une des revendications précédentes, dans lequel l'espace clos (15) présente un raccord (16) pour la réalisation d'une purge ou pour l'application d'une pression.

10. Sous-marin selon l'une des revendications précédentes, dans lequel le corps (3) de la vanne présente un raccord côté entrée (4) pour le conduit de distribution (c₂) provenant du manodétendeur (1) et un raccord côté sortie (5) pour le conduit de distribution (c₃) menant à l'ensemble consommateur (b).
